(19) Europäisches Patentamt
European Patent Office
Office européen des brevets

(11) EP 0 649 877 B1

(12) EUROPÄISCHE PATENTSCHRIFT

(45) Veröffentlichungstag und Bekanntmachung des Hinweises auf die Patenterteilung:
**28.03.2001 Patentblatt 2001/13**

(51) Int Cl.^7: **C08L 83/04**, C08K 5/521

(21) Anmeldenummer: **94116179.6**

(22) Anmeldetag: **13.10.1994**

(54) **Mischungen mit selbstschmierenden Eigenschaften**

Self-lubricating mixtures

Compositions autolubrifiantes

(84) Benannte Vertragsstaaten:
**AT BE CH DE ES FR GB IT LI NL SE**

(30) Priorität: **26.10.1993 DE 4336472**
**15.03.1994 DE 4408660**

(43) Veröffentlichungstag der Anmeldung:
**26.04.1995 Patentblatt 1995/17**

(73) Patentinhaber: **GE Bayer Silicones GmbH & Co. KG**
**40699 Erkrath (DE)**

(72) Erfinder: **Wrobel, Dieter, Dr.**
**D-51373 Leverkusen (DE)**

(56) Entgegenhaltungen:
**FR-A- 2 372 203**
**US-A- 2 618 600**
**US-A- 2 684 336**
**US-A- 4 745 144**

- **DATABASE WPI Derwent Publications Ltd., London, GB; AN 82-86508 & JP-A-57 141 476 (HARADEN KOJI KK.) , 1.September 1982**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 649 877 B1

## Beschreibung

Die vorliegende Erfindung betrifft Mischungen mit selbstschmierenden Eigenschaften im ausgehärteten Zustand, enthaltend mindestens einen vernetzungsfähigen Siliconkautschuk a), mindestens einen Arylphosphorsäureester b) und mindestens einen weiteren Zusatzstoff c), ein Verfahren zu deren Herstellung sowie Formkörper auf Basis dieser Mischungen.

Selbstschmierende Silicone sind an sich bekannt:

Nach EP 369 255 (Description of the Prior Art) gelten z.B. Copolymere mit Diethylsiloxy- und Diphenylsiloxy-Einheiten mit einem signifikaten Anteil an Diphenylsiloxygruppen als nur bedingt für diesen Zweck geeignet, da das Ausschwitzverhalten häufig unvorhersehbar ist und der Schmiereffekt oft ausbleibt.
Diesen Nachteil sollen kurzkettige OH-endgestoppte Diorganosiloxane mit Trifluorpropylgruppen in peroxidisch vernetzten Systemen nicht besitzen (EP 369 255).
Solche OH-endgestoppten Öle eignen sich jedoch nicht für additionsvernetzende Siliconkautschuke, die Hydrogensiloxane als Vernetzer enthalten. Während der Vernetzungsreaktion reagieren neben den Vinylgruppen der Polymere auch die OH-endgestoppten Polymere mit den Hydrogensiloxanen unter Ausbildung einer SiOSi-Bindung:

$$\equiv Si — OH + H — Si \equiv \;\rightarrow\; \equiv Si — O — Si \equiv + H_2$$

Sie werden mit in das Netzwerk eingebunden und können nicht mehr an die Oberfläche migrieren und dort einen Schmierfilm ausbilden.
Darüber hinaus besitzen beide Öltypen weitere Nachteile. Sie bestehen aus Polymeren unterschiedlicher Kettenlänge, die unvermeidlich schwankende Molmassenverteilungen bedingen. Dementsprechend schwankt auch das Ausschwitzverhalten mehr oder weniger stark. Ein weiterer Nachteil für den technischen Einsatz liegt in den hohen Preisen dieser Spezialsiliconöle.
Die Verwendung von Phosphorsäureestern in peroxidischen Siliconkautschuken zur Verbesserung des Widerstandes gegen dynamische Ermüdung wird in US 4 745 144 beschrieben. Hierfür eignen sich jedoch nur siliconverträgliche Phosphorsäureester, wie z.B. Tributylphosphat. Vor Anwendung in Additionssystemen, die über die Hydrosilylierungsreaktion aushärten, wird ausdrücklich gewarnt, da die Gefahr einer Vergiftung des Katalysators durch die phosphorhaltigen Substanzen besteht.
Die US-4,745,144 beschreibt homogene Silikonkautschuk-Zusammensetzungen mit nur geringen Anteilen an organischen Phosphorverbindungen, die gute Homogenität und erhöhte Lebensdauer besitzen.
Im Derwent Abstract AN 82-86508 werden feuerfeste luftdichte Dichtungsmaterialien mit hohem Gehalt an organischen Phosphaten offenbart.
Gemäß der US-A-2,618,600 lässt sich durch den Zusatz von mindestens zwei Phosphorsäureestern das Schmierverhalten von Silikonöl verbessern.
Aufgabe der vorliegenden Erfindung ist daher die Bereitstellung von Mischungen, die in ausgehärtetem Zustand selbstschmierende Eigenschaften aufweisen.
Es wurde nun gefunden, daß der Zusatz mindestens eines mit den Siliconmassen nicht verträglichen Arylphosphorsäureesters und mindestens eines weiteren Zusatzstoffes zu keinen Vergiftungserscheinungen des Katalysators führt und das es im Gegensatz zu den bisher bekannten Trialkylphosphaten (z.B. Tributylphosphat) zur Ausbildung eines Schmierfilmes kommt.
Gegenstand der vorliegenden Erfindung sind vernetzbare Mischungen mit selbstschmierenden Eigenschaften im ausgehärteten Zustand, im wesentlichen bestehend aus

a) 100 Gewichtsteilen mindest eines vernetzbaren Siliconkautschuks,
b) 0,5 bis 10 Gewichtsteilen, bezogen auf die Gesamtmenge der Mischung, mindestens eines mit den Siliconmassen nicht verträglichen Arylphosphorsäureesters ausgewählt aus der Gruppe bestehend aus Tri(isopropyl)phenylphosphat, 2-Ethylhexyldiphenylphosphat, Diphenylkresylphosphat und $\alpha$-Methylbenzylphenylphosphat, so daß es beim vernetzten Produkt zur Ausbildung eines Schmierfilms kommt und
c) einem unreaktiven, nicht inhibierenden Silicon-inkompatiblen Öl und/oder Füllstoff.

Siliconkautschuke a) im Sinne der Erfindung sind an sich bekannte Substanzen, wie sie z.B. in W. Noll "Chemistry and Technology of Silicones", 1968, Seite 246, beschrieben sind. Vorzugsweise entspricht Komponente a) einem Siliconkautschuk der folgenden Formel (II)

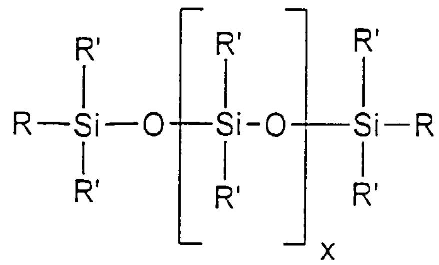

(II)

worin R und R' Alkylreste mit 1 bis 8 Kohlenstoffatomen, Arylreste, Vinylreste und Fluoralkylreste mit 3 bis 8 Kohlenstoffatomen sind, so daß das Polymer 0,0002 bis 3 Gew.-% Vinylgruppen enthält, und x so variiert wird, daß die Viskosität des Polymeren von 0,1 bis 30 000 Pa.s reicht,

Der Siliconkautschuk kann gegebenenfalls Füllstoffe und Hydrophobierungsmittel enthalten.

Hydrophobierungsmittel im Sinne der Erfindung sind vorzugsweise silanolhaltige Siliconverbindungen mit einer Viskosität 0,01 bis 1 Pa.s und/oder Hexaalkyldisilazanen, wobei die organischen Gruppen unter Alkylresten mit 1 bis 8 Kohlenstoffatomen, Vinylresten, Arylresten und Fluoralkylresten mit 3 bis 8 Kohlenstoffatomen so ausgewählt sind, daß die Siliconverbindungen einen Silanolgehalt (Gehalt an S:OH-Gruppen) von 2 bis 10 Gew.-% aufweisen.

Als Füllstoffe für das erfindungsgemäße Verfahren eignen sich z.B. pyrogene oder gefällte, feinteilige Kieselsäuren mit einer BET-Oberfläche von 50 bis 500 $m^2/g$. Derartige Füllstoffe können oberflächenmodifiziert sein, z.B. mit siliziumorganischen Verbindungen. Die Modifizierung kann auch während der Einarbeitung in das Polymer durch Zusatz von z.B. Hexamethyldisilazan und/oder 1,3-Divinyl-1,1,3,3-tetramethyldisilazan unter Zusatz von Wasser erreicht werden.

Weiter können als Füllstoffe Substanzen wie z.B. Diatomeenerden, feinteilige Quarzmehle, amorphe Kieselsäuren oder Ruße eingesetzt werden.

In einer weiteren Ausführungsform der vorliegenden Erfindung kann der Siliconkautschuk a) sowohl ein additionsvernetzender Siliconkautschuk mit Hydrogensiloxan als Vernetzer a') als auch ein peroxidisch vernetzbarer Silicon-Kautschuk a") sein.

In additionsvernetzenden Systemen a') enthält die Mischung vorzugsweise die nachfolgend beschriebenen Hydrogensiloxane als Vernetzer

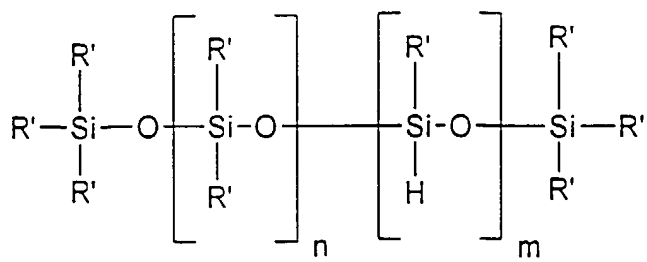

wobei R' Alkylreste mit 1 bis 8 Kohlenstoffatomen oder Aryl- und Fluoralkylreste mit 3 bis 8 C-Atomen sind, $m \geq 3$ und n + m so variiert, daß das Polymer eine Viskosität von 0,005 bis 1 Pa.s hat, sowie zusätzlich einen Rhodium- oder Platinkatalysator und gegebenenfalls Inhibitoren und weitere Hilfsstoffe.

Die Platinkatalysatoren sind die üblicherweise für die additionsvemetzenden Systeme eingesetzten Katalysatoren, insbesondere Pt(0)-Komplexe mit Vinylsiloxanen als Liganden.

Als Inhibitoren eignen sich acetylenische Alkohole wie z.B. 2-Methylbutin(3)-ol-(2), Ethinylcyclohexanol, Tetramethyltetravinylcyclotetrasiloxan oder Tetramethyldivinyldisiloxan.

Peroxidisch vernetzende Massen enthalten statt der Hydrogensiloxane und des Katalysators vorzugsweise Alkyl- oder Arylperoxide wie z.B. Dicumylperoxid, 1,4-Bis(tert.-butylperoxy)-1,4-dimethylhexan, 2,4-Dichlorbenzoylperoxid, 4-Methylbenzoylperoxid.

Die erfindungsgemäß eingesetzten Arylphosphorsäureester sind in der Regel im Handel erhältliche Produkte

Bei den Arylphosphorsäureestern der Komponente b) handelt es sich um Tri(isopropyl)phenylphosphat. 2-Ethyldiphenylphosphat, Diphenylkresylphosphat und α-Methylbenzylphenylphosphat.

Zusatzstoffe c) im Sinne der Erfindung sind vorzugsweise unreaktive, nicht inhibierende, siliconunverträgliche Öle, wie beispielsweise Trifluorpropylmethyl-siliconöl, Paraffinöl und Weichmacheröle, wie Adipinsäureester und Polyester.

Die Höhe des Zusatzes an Arylphosphorsäureester b) richtet sich im wesentlichen nach der Härte des Vulkanisats und dem gewünschten Umfang des Ausschwitzens sowie dem Grad der Unverträglichkeit des Arylphosphorsäureesters.

In den erfindungsgemäßen Mischungen beträgt die Menge des Arylphosphorsäureesters b) 0,5 bis 10 Gew.-%, besonders bevorzugt 3 bis 10 Gew.-%, die Menge der
Komponente C) vorzugsweise 0.5 bis 5 Gew.-%, bezogen auf die Gesamtmischung.

Vorzugsweise weisen die erfindungsgemäßen Mischungen folgende Zusammensetzung auf:

- 100 Gewichtsteile eines Polysiloxans oder eines Gemisches aus mehreren Polysiloxanen der Formel (II)
- 0,1 bis 10 Gewichtsteile mindestens eines Hydrophobierungsmittels
- 0 bis 200 Gewichtsteile Füllstoff
- 3 bis 10 Gewichtsteile eines Arylphosphorsäureesters der Komponente b). bezogen auf die Gesamtmischung
- 0,5 bis 5 Gewichtsprozent Zusatzstoffe, bezogen auf die Gesamtmischung,
- und für das additionsvernetzende System:
  1 bis 50 Gewichtsteile eines Vernetzers und
  1 bis 250 ppm eines Platin- oder Rhodiumkatalysators sowie gegebenenfalls Inhibitoren und weiteren Hilfsstoffen
- und für das peroxidisch vernetzende System:
  0,1 bis 3 Gewichtsprozent Peroxide, bezogen auf die Gesamtmischung..

Gegenstand der vorliegenden Erfindung ist auch ein Verfahren zur Herstellung dieser Siliconmassen, wonach die Komponenten a) bis c) miteinander verrührt werden.

Gegenstand der vorliegenden Erfindung sind ebenfalls Formkörper mit selbstschmierenden Eigenschaften, erhältlich durch Einbringen der Komponenten a), b) und c) in eine Form und anschließende Vulkanisation bei Überdruck und einer Temperatur von 50 bis 250°C.

Nach 1- bis 3-tägiger Lagerung bei Raumtemperatur bildet sich auf der Oberfläche der Formkörper ein Ölfilm, der bei mikroskopischer Betrachtung als Aneinanderreihung vieler kleiner Tröpfchen zu erkennen ist.

Der Gegenstand der Erfindung soll anhand der folgenden Beispiele erläutert werden (Teile = Gewichtsteile).

**Beispiel 1** (erfindungsgemäß)

In einem Kneter werden 47 Gew.-Teile vinylendgestopptes Polydimethylsiloxan mit einer Viskosität von 10 Pa.s mit 4 Gew.-Teilen Hexamethyldisilazan, 0,3 Gew.-Teilen Tetramethyldivinyldisilazan und 3 Gew.-Teilen Wasser gemischt und anschließend mit 18 Gew.-Teilen pyrogen hergestellter Kieselsäure mit einer spezifischen Oberfläche von 300 $m^2$/g nach BET zu einer homogenen Masse verknetet (Einarbeitung des Füllstoffs gemäß DE-OS 2 535 334). Die Mischung wurde zunächst auf 130°C erwärmt und 1,5 Stunden im geschlossenen Kneter gerührt und danach bei 160°C unter Vakuum von Wasser und überschüssigem Silazan befreit. Nach dem Erkalten des Compounds wird die Mischung mit folgenden Zusätzen vermischt und vulkanisiert:

90 g dieser Siliconbasiszusammensetzung werden mit 1,53 g eines trimethylsilylendblockierten Polyorganosiloxan-Vernetzers mit durchschnittlich 5 Methylhydrogensiloxaneinheiten und 3 Dimethylsiloxaneinheiten pro Molekül, 0,15 g eines Platinkatalysators in Form eines Komplexes von Chlorplatinsäure mit symmetrischen Divinyltetramethyldisiloxan und enthaltend 0,65 % Platin und etwa 0,02 g 3,5-Dimethyl-1-hexin-3-ol als Inhibitor und 1,5 Teile Diphenylkresylphosphat vermischt und 10 Minuten bei 175°C in einer 2 mm dicken Preßform unter Druck ausgehärtet. Nach 1tägiger Lagerung bei Raumtemperatur ist die Oberfläche der Platte mit einem dünnen Ölfilm bedeckt.

**Beispiel 2** (Vergleich)

Wie Beispiel 1, jedoch mit 1,5 Gew.-Teilen Tributylphosphat anstelle von Diphenylkresylphosphat.
Nach 1tägiger Lagerung bei Raumtemperatur ist die Oberfläche trocken.

**Beispiel 3** (Vergleich)

Wie Beispiel 1, jedoch mit 9 Gew.-Teilen Tributylphosphat anstelle von Diphenylkresylphosphat.
Nach 1tägiger Lagerung bei Raumtemperatur ist die Oberfläche trocken.

**Beispiel 4** (erfindungsgemäß)

Wie Beispiel 1, jedoch mit 6,4 Gew.-Teilen Tri(isopropylphenyl)phosphat anstelle von Diphenylkresylphosphat.
Nach 1tägiger Lagerung bei Raumtemperatur ist die Oberfläche mit einem dünnen Ölfilm bedeckt.

**Beispiel 5**

Allgemeine Vorschrift zur Herstellung der eingesetzten Arylphosphorsäureester

a. Herstellung des α-Methylbenzyl-substituierten Phenols
Zu einer Mischung aus 3,0 Mol Phenol oder eines Phenolderivates und 0,15 Mol $POCl_3$ wird bei 130 bis 140°C langsam 2,0 Mol Styrol zugetropft.
Das nach vollständiger Zugabe und Abklingen der exothermen Reaktion erhaltene Rohprodukt wird ohne weitere Reinigung in b) eingesetzt (vergl. DE 3 922 518).

b. Herstellung des Arylphosphorsäureesters
In einem Dreihalskolben wird das unter a) dargestellte Rohprodukt bei Temperaturen von etwa 300°C mit 1 Mol $POCl_3$ bis zur beendeten Chlorwasserstoffabspaltung umgesetzt. Der Überschuß des eingesetzten Phenolderivates und eventuell vorliegender Anteile an Phosphorsäure-diarylesterchloride werden nach beendeter Reaktion mit kalter verdünnter Natronlauge herausgewaschen (vergl. Houben Weyl Bd. XII 12, S. 321-322).

**Beispiel 6** (erfindungsgemäß)

Wie Beispiel 1, jedoch mit 3,1 Gew.-Teilen eines Arylphosphorsäureesters aus Beispiel 5 der allgemeinen Formel

$$O = P(OR)^1(OR^2)(OR)$$

mit $R^1 = R^2 = R^3$ = α-Methylbenzylphenyl anstelle von Diphenylkresylphosphat (A-Stufe). Anschließend wird das Vulkanisat 4 Stunden bei 200°C in Heißluft gelagert (B-Stufe). Beide Aushärtungsstufen (A- und B-Stufe) zeigen nach 1tägiger Lagerung bei Raumtemperatur einen dünnen Ölfilm auf der Oberfläche.

**Beispiel 7** (erfindungsgemäß)

Wie Beispiel 1, jedoch mit 4 Gew.-Teilen 2-Ethylhexyldiphenylphosphat anstelle von Diphenylkresylphosphat. Nach 1tägiger Lagerung bei Raumtemperatur ist die Oberfläche mit einem dünnen Ölfilm bedeckt.

**Beispiel 8**

100 Gewichtsteile eines Dimethylpolysiloxans (0,02 % Vinylsiloxyeinheiten) mit einer Kettenlänge von 6000 Einheiten und einer Viskosität von $20.10^6$ mPas, Enden von Trimethylsiloxy-Gruppen begrenzt, mischt man mit 53,5 Gewichtsteilen einer Kieselsäure mit einer Oberfläche nach BET von 200 $m^2/g$ in einem Kneter bei 150°C. Als Verarbeitungshilfen fügt man 3,7 Gew.-Teile eines Siloxanols mit 18 % SiOH-Gruppen und 4,2 Teile eines Siloxanols, welches zusätzlich 5 % Vinylmethylsiloxy-Einheiten enthält sowie 0,55 Teile Hexamethyldisilazan hinzu.

**Beispiel 9**

200 g dieser Siliconbasismischung aus Beispiel 8 werden mit 8 g Diphenylkresylphosphat, 2 g pyrogen hergestellter Kieselsäure mit einer spezifischen Oberfläche von 300 $m^2/g$ nach BET und 3 g einer 50%igen Anpastung von Bis(2,4-dichlorbenzoyl)peroxid in Siliconöl auf der Walze vermischt und 10 Minuten bei 125°C in einer 2 mm dicken Preßform unter Druck ausgehärtet. Nach 1 tägiger Lagerung bei Raumtemperatur ist die Oberfläche der Platte mit einem dünnen Ölfilm bedeckt.

**Beispiel 10**

Wie Beispiel 9, jedoch mit 1,2 g Dicumylperoxid als Peroxid und einer Aushärtetemperatur von 175°C. Nach 1 tägiger Lagerung bei Raumtemperatur ist die Oberfläche mit einem dünnen Ölfilm bedeckt.

**Beispiel 11** (Vergleich)

Wie Beispiel 1, jedoch mit 1,5 Teilen eines Copolymeren-Öls aus Dimethylsiloxy- und Diphenylsiloxy-Einheiten mit einer Viskosität von 300 mPa.s und einem Brechungsindex von 1,5135 bei 20°C anstelle von 1,5 Teilen Diphenylkresylphosphat. Nach 3tägiger Lagerung bei Raumtemperatur ist die Oberfläche trocken.

**Beispiel 12** (erfindungsgemäß)

Wie Beispiel 11, jedoch zusätzlich mit 0,6 Teilen Diphenylkresylphosphat. Nach 3tägiger Lagerung bei Raumtemperatur ist die Oberfläche mit einem dünnen Ölfilm bedeckt.

**Beispiel 13** (erfindungsgemäß)

Wie Beispiel 11, jedoch zusätzlich mit 1,0 Teilen Diphenylkresylphosphat. Nach 1-tägiger Lagerung bei Raumtemperatur ist die Oberfläche mit einem dünnen Ölfilm bedeckt.

**Beispiel 14** (erfindungsgemäß)

Wie Beispiel 11, jedoch mit 0,5 Teilen Copolymerenöl (aus Beispiel 11) und zusätzlich 1,1 Teilen Diphenylkresylphosphat. Nach 1-tägiger Lagerung bei Raumtemperatur ist die Oberfläche mit einem dünnen Ölfilm bedeckt.

**Beispiel 15** (Vergleichsbeispiel)

Wie Beispiel 11, jedoch mit 1,9 Teilen Copolymerenöl (aus Beispiel 11). Nach 1-tägiger Lagerung bei Raumtemperatur zeigt die Oberfläche bei Wiederholung schwankende Eigenschaften von trocken bis leicht schmierend.

**Beispiel 16** (erfindungsgemäß)

Wie Beispiel 15, jedoch zusätzlich mit 0,5 Teilen Diphenylkresylphosphat. Nach 1-tägiger Lagerung bei Raumtemperatur ist die Oberfläche mit einem dünnen Ölfilm bedeckt.

**Patentansprüche**

1. Vernetzbare Mischungen mit selbstschmierenden Eigenschaften im ausgehärteten Zustand, im wesentlichen bestehend aus

   a) 100 Gewichtsteilen mindest eines vernetzbaren Siliconkautschuks,
   b) 0,5 bis 10 Gewichtsteilen, bezogen auf die Gesamtmenge der Mischung, mindestens eines mit den Siliconmassen nicht verträglichen Arylphosphorsäureesters ausgewählt aus der Gruppe bestehend aus Tri(isopropyl)phenylphosphat, 2-Ethylhexyldiphenylphosphat, Diphenylkresylphosphat und α-Methylbenzylphenylphosphat, so daß es beim vernetzten Produkt zur Ausbildung eines Schmierfilms kommt und
   c) einem unreaktiven, nicht inhibierenden Silicon-inkompatiblen Öl und/-oder Füllstoff.

2. Mischungen gemäß Anspruch 1, dadurch gekennzeichnet, daß der vernetzbare Siliconkautschuk (a) aus einem oder einem Gemisch aus mehreren Siliconkautschuken der Formel II besteht

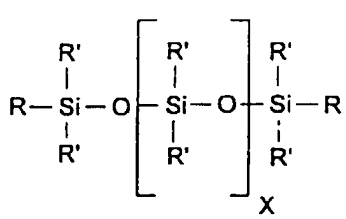

(II)

worin
R und R' Alkylreste mit 1 bis 8 Kohlenstoffatomen, Arylreste, Vinylreste und Fluoralkylreste mit 3 bis 8 Kohlenstoffatomen sind, so daß das Polymer 0,0002 bis 3 Gew.-% Vinylgruppen enthält und x so variiert wird, daß die

Viskosität des Polymeren 0,1 bis 30000 Pa·s beträgt, wobei der Siliconkautschuk gegebenenfalls Füllstoffe und Hydrophobierungsmittel enthalten kann.

**3.** Mischungen gemäß Anspruch 1, dadurch gekennzeichnet, daß der Siliconkautschuk (a) ein additionsvernetzender Siliconkautschuk mit Hydrogensiloxan als Vernetzer ist.

**4.** Mischungen gemäß Anspruch 1, dadurch gekennzeichnet, daß der Siliconkautschuk (a) ein peroxidisch vernetzbarer Siliconkautschuk ist.

**5.** Mischungen gemäß Anspruch 1, dadurch gekennzeichnet, daß die Komponente (c) in einer Menge von 0,5 bis 5 Gewichtsteilen vorhanden ist.

**6.** Verfahren zur Herstellung von Mischungen gemäß Anspruch 1, dadurch gekennzeichnet, daß die Komponenten (a) bis (c) miteinander verrührt werden.

**7.** Formkörper mit selbstschmierenden Eigenschaften, erhältlich durch Einbringen der Komponenten (a), (b) und c) gemäß Anspruch 1 in eine Form und anschließende Vulkanisation bei Überdruck und einer Temperatur von 50 bis 250 °C.

## Claims

**1.** Cross-linkable mixtures having self-lubricating properties in the fully cured state, essentially consisting of

a) 100 parts by weight of at least one cross-linkable silicone rubber,
b) from 0.5 to 10 parts by weight, based on the total amount of the mixture, of at least one arylphosphoric acid ester which is not compatible with the silicone compositions, selected from the group consisting of tri(isopropyl) phenyl phosphate, 2-ethylhexyl diphenyl phosphate, diphenyl cresyl phosphate and α-methylbenzyl phenyl phosphate, so that a lubricating film is formed in the cross-linked product, and
c) an unreactive, non-inhibiting silicone-incompatible oil and/or filler.

**2.** Mixtures according to Claim 1, characterized in that the cross-linkable silicone rubber (a) consists of one or a mixture of a plurality of silicone rubbers of the formula II

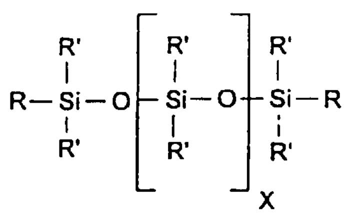

(II)

in which
R and R' are alkyl radicals having 1 to 8 carbon atoms, aryl radicals, vinyl radicals and fluoroalkyl radicals having 3 to 8 carbon atoms, so that the polymer contains from 0.0002 to 3% by weight of vinyl groups, and x is varied so that the viscosity of the polymer is from 0.1 to 30,000 Pa · s, where the silicone rubber can optionally contain fillers and hydrophobicizing agents.

**3.** Mixtures according to Claim 1, characterized in that the silicone rubber (a) is an addition-cross-linking silicone rubber with hydrogensiloxane as cross-linking agent.

**4.** Mixtures according to Claim 1, characterized in that the silicone rubber (a) is a peroxidically cross-linkable silicone rubber.

**5.** Mixtures according to Claim 1, characterized in that component (c) is present in an amount of from 0.5 to 5 parts by weight.

**6.** Process for the preparation of mixtures according to Claim 1, characterized in that components (a) to (c) are stirred

with one another.

7. Moulding having self-lubricating properties, obtainable by introducing components (a), (b) and (c) according to Claim 1 into a mould, followed by vulcanization at excess pressure and a temperature of from 50 to 250°C.

**Revendications**

1. Mélanges réticulables ayant des propriétés autolubrifiantes à l'état durci, constitués essentiellement de

    a) 100 parties en poids d'au moins un caoutchouc siliconé réticulable,
    b) de 0,5 à 10 parties en poids, par rapport à la quantité totale du mélange, d'au moins un ester d'acide arylphosphorique non compatible avec la matière siliconée, choisi parmi le groupe constitué du phosphate de tri(isopropyl)phényle, du phosphate de 2-éthylhexyldiphényle, du phosphate de diphénylcrésyle et du phosphate de α-méthylbenzylphényle, de telle sorte qu'il se forme un film lubrifiant dans le produit réticulé, et
    c) une huile et/ou une charge non réactives, non inhibitrices et incompatibles avec les silicones.

2. Mélanges selon la revendication 1, caractérisés en ce que le caoutchouc siliconé réticulable (a) est constitué d'un caoutchouc siliconé ou d'un mélange de plusieurs caoutchoucs siliconés de formule II

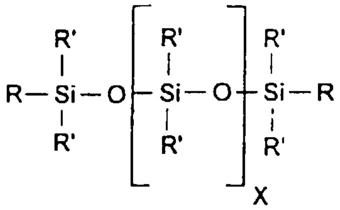

(II)

dans laquelle
R et R' représentent des radicaux alkyle ayant de 1 à 8 atomes de carbone, des radicaux aryle, des radicaux vinyle et des radicaux fluoroalkyle ayant de 3 à 8 atomes de carbone, de telle sorte que le polymère renferme de 0,0002 à 3% en poids de groupes vinyle, et on fait varier x de telle sorte que la viscosité du polymère soit de 0,1 à 30 000 Pa.s, le caoutchouc siliconé pouvant éventuellement contenir des charges et des agents d'hydrophobisation.

3. Mélanges selon la revendication 1, caractérisés en ce que le caoutchouc siliconé (a) est un caoutchouc siliconé réticulant par addition avec de l'hydrogénosiloxane en tant qu'agent de réticulation.

4. Mélanges selon la revendication 1, caractérisés en ce que le caoutchouc siliconé (a) est un caoutchouc siliconé réticulable par un peroxyde.

5. Mélanges selon la revendication 1, caractérisés en ce que le composant (c) est présent en une quantité de 0,5 à 5 parties en poids.

6. Procédé de préparation de mélanges selon la revendication 1, caractérisé en ce que les composants (a) à (c) sont agités les uns avec les autres.

7. Pièce moulée ayant des propriétés autolubrifiantes, pouvant être obtenue en introduisant les composants (a), (b) et (c) selon la revendication 1 dans un moule, et en procédant ensuite à une vulcanisation à une surpression et à une température de 50 à 250°C.